# EUROPÄISCHE PATENTSCHRIFT

(11) **EP 1 786 663 B1**
(45) Veröffentlichungstag und Bekanntmachung des Hinweises auf die Patenterteilung: **18.06.2008**
(21) Anmeldenummer: 06705851.1
(22) Anmeldetag: 18.01.2006
(51) Int. Cl.: B62K 5/08, A61G 5/04

(54) **FAHRZEUG FÜR BEHINDERTE PERSONEN**
VEHICLE FOR DISABLED INDIVIDUALS
VEHICULE DESTINE A DES PERSONNES HANDICAPEES

(30) Priorität: 14.09.2005 DE 102005044661
(43) Veröffentlichungstag der Anmeldung: 23.05.2007
(73) Patentinhaber: Lippert, Stefan, 73733 Esslingen (DE)
(72) Erfinder: LIPPERT, Stefan, 73733 Esslingen (DE); ELIZOV, Alexander, St. Petersburg 195274 (RU)
(74) Vertreter: Pfenning, Meinig & Partner GbR
(86) Internationale Anmeldenummer: PCT/DE2006/000115
(87) Internationale Veröffentlichungsnummer: WO 2007/031044

(56) Entgegenhaltungen:
- WO-A-03/103367
- US-A- 5 547 038
- PATENT ABSTRACTS OF JAPAN Bd. 2003, Nr. 12, 5. Dezember 2003 (2003-12-05) -& JP 2005 001469 A (ATEX CO LTD), 6. Januar 2005 (2005-01-06)

## Beschreibung

Die Erfindung betrifft ein Fahrzeug für behinderte Menschen, die in ihrer Mobilität eingeschränkt sind.

Es kann sowohl mit einem Sitz ausgestattet sein, wie auch in stehender Position benutzt werden, wenn es entsprechend ausgebildet worden ist.

Ein Fahrzeug für behinderte Menschen mit den Merkmalen des Oberbegrifffs des Unabhängigen Anspruch 1 ist bekannt aus WO 03/103367.

Solche Fahrzeuge sind üblicherweise mit drei oder auch vier Rädern ausgestattet. Sie können gelenkt und häufig elektrisch angetrieben sein, so dass sich der Mobilitätsradius erweitern lässt. Häufig sind auch elektrische Steuerungen vorhanden, so dass auch eine Nutzung von stark behinderten Personen möglich ist.

Bei den bekannten Fahrzeugen sind aber die Möglichkeiten beim Fahren begrenzt und Richtungsänderungen nur unter Einhaltung von Mindestkurvenradien möglich.

Es ist daher Aufgabe der Erfindung, die Flexibilität der Nutzung von Fahrzeugen für behinderte Personen zu erhöhen.

Erfindungsgemäß wird diese Aufgabe mit einem Fahrzeug, das die Merkmale des Anspruchs 1 aufweist, gelöst. Vorteilhafte Ausgestaltungen und Weiterbildungen der Erfindung können mit den in den untergeordneten Ansprüchen bezeichneten Merkmalen erreicht werden.

Mit der Erfindung kann ein Fahrzeug für behinderte Personen auf engstem Raum manövrieren. Außerdem sind Fahrten senkrecht zur Längsachse des Fahrzeuges und auch eine Rotation um eine Achse des Fahrzeugs möglich. Im letzt genannten Fall dreht sich ein erfindungsgemäßes Fahrzeug, ohne dass ein Mindestradius eingehalten werden muss, so dass der für das Drehen erforderliche Raum ausschließlich durch die äußeren Abmaße des Fahrzeuges bestimmt wird.

Das erfindungsgemäße Fahrzeug ist hierzu so ausgebildet, dass insgesamt mindestens drei lenkbare Räder, also ein Vorder- und zwei Hinterräder vorhanden sind. Die Hinterräder sind dabei einzeln an einem Rahmen mit einer eigenen Radaufhängung gehalten und an jedem Hinterrad ist ein gesonderter, steuerbarer Lenkantrieb vorhanden, so dass die Hinterräder einzeln und unabhängig voneinander, auch in verschiedenen Richtungen und mit unterschiedlichen Winkeln verschwenkt werden können.

Sie sollten dabei um mindestens 90°, möglichst aber um bis zu 180 ° verschwenkt werden können.

Vorteilhaft sind die Hinterräder auch einzeln angetrieben. Die Antriebe können elektrische Radnabenmotore sein, die ebenfalls einzeln angesteuert werden können sollen. So besteht die Möglichkeit die Hinterräder bei Bedarf auch mit unterschiedlicher Drehrichtung anzutreiben.

Ein gesonderter Lenkantrieb kann aber auch am Vorderrad vorhanden sein, der ebenfalls elektrisch angetrieben und gesteuert werden kann.

In einer einfacheren Ausführung kann aber auch ein in einer Gabel gehaltenes Vorderrad mit einer mit der Gabel verbundenen Lenkstange manuell gelenkt werden.

An einer Lenkstange oder einem anderen Ort des Fahrzeuges können zusätzliche für die Steuerung des Fahrzeugs nutzbare Elemente vorhanden sein.

So kann mindestens ein, bevorzugt aber zwei Drehwinkelsensor(en) vorhanden sein, die für die Steuerung des Fahrzeugs genutzt werden können. So liefert ein Drehwinkelsensor ein Signal über den Schwenkwinkel des Vorderrades. Dieses Signal kann über eine elektronische Steuerung für die Ansteuerung der beiden Lenkantriebe und der Antriebe der Hinterräder genutzt werden.

Ein weiterer Drehwinkel- oder eine anderer geeigneter Sensor kann für die Steuerung der Fahrgeschwindigkeit und/oder der Drehrichtung der Hinterradantriebe ausgenutzt werden. Dies kann beispielsweise durch eine Verschwenken der Lenkstange beeinflusst werden. So kann ein Verschwenken der Lenkstange parallel zur Längsachse der Gabel die jeweilige Drehrichtung der Antriebe für die Hinterräder und je nach Verschwenkwinkel auch die Drehzahl und damit die Fahrgeschwindigkeit beeinflussen.

Ein erfindungsgemäßes Fahrzeug kann aber auch vier lenkbare Räder aufweisen, wobei in diesem Fall die Vorderräder in analoger Form zu den Hinterrädern aufgehangen, angetrieben und gelenkt werden können. Es können also auch zwei Lenkantriebe für die beiden Vorderräder vorhanden sein, die auch so gesteuert werden können.

Außerdem kann ein Umschalter, bevorzugt an der Lenkstange installiert vorhanden sein. Mit einem solchen Umschalter können bestimmte Fahrmoden über die elektronische Steuerung ausgewählt werden. So können die Hinterräder so verschwenkt werden, dass sie parallel zueinander ausgerichtet sind. Bei entsprechender Stellung des Vorderrades ist dann ein Fahren des Fahrzeuges senkrecht zu seiner eigenen Längsachse möglich, was beispielsweise in engen Gängen, in denen ein Drehen oder eine Kurvenfahrt des Fahrzeuges nicht möglich ist, erforderlich sein kann.

In anderer Form kann in einem gewählten Fahrmodus auch eine Rotation des Fahrzeuges um seine eigene Achse erfolgen. Hierfür werden die Hinterräder entgegengesetzt zueinander in jeweils einem bestimmten Winkel schräg verschwenkt und die Drehrichtung der Antriebe für die Hinterräder entsprechend ausgewählt, wobei die Antriebe dann mit entgegen gesetzter Drehrichtung betrieben werden, obwohl sich die Hinterräder in der gleichen Richtung drehen.

Auch im Normalbetrieb können die Lenkantriebe der Hinterräder aktiviert sein, so dass sie bei einer normalen Kurvenfahrt die Hinterräder mit lenken. Dabei können die Hinterräder in Abhängigkeit des jeweiligen Kurvenradius unabhängig voneinander mit unterschiedlichen Winkeln ausgelenkt sein, so dass jedes Rad dem optimalen Kurvenradius folgen kann.

Nachfolgend soll die Erfindung beispielhaft erläutert werden.

Dabei zeigen:
Figur 1 ein Beispiel eines erfindungsgemäßen Fahrzeuges für einen normalen Fahrmodus;
Figur 2 das Fahrzeug nach Figur 1 für einen Fahrmodus mit Fortbewegungsrichtung senkrecht zur Fahrzeuglängsachse;
Figur 3 das Fahrzeug nach Figur 1 für einen Fahrmodus für eine Drehung um die eigen Achse;
Figur 3a eine schematische Draufsicht, aus der die Stellung der Räder in Fahrmodus für eine Drehung hervorgeht;
Figur 4 das Fahrzeug nach Figur 1 für eine schräge Fahrt in Bezug zur Längsachse des Fahrzeugs und
Figur 4a eine schematische Draufsicht, aus der die Stellung der bei schräger Fahrt hervorgeht.

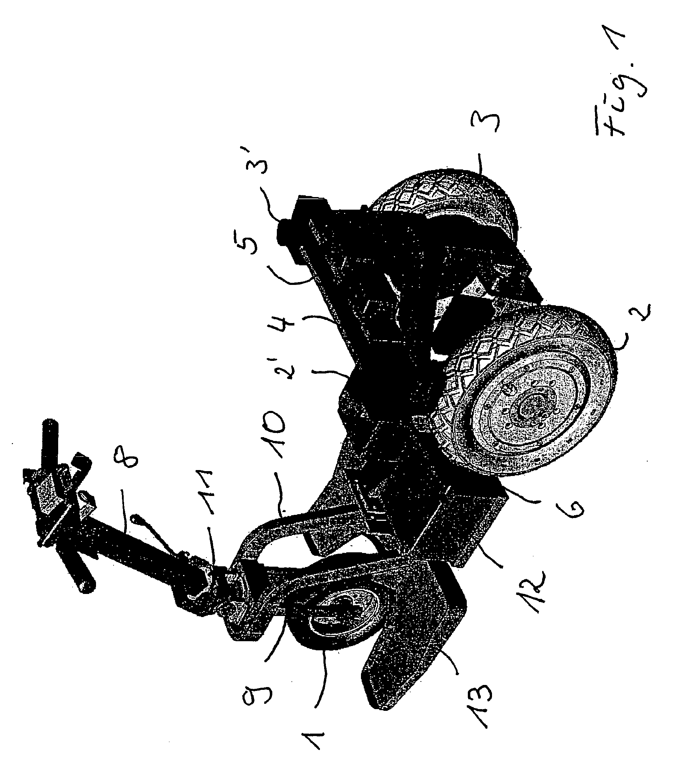

Bei dem in Figur 1 gezeigten Beispiel eines erfindungsgemäßen Fahrzeuges für behinderte Personen sind ein lenkbares Vorderrad 1 und zwei ebenfalls lenkbare Hinterräder 2 und 3 vorhanden. Das Vorderrad ist in einer Gabel 9 gehalten, die mittels einer Lenkstange 8 gemeinsam mit dem Vorderrad 1 verschwenkt werden kann. Lenkstange 8 und Gabel 9 sind mit einem Kardangelenk 11 verbunden. Hierfür kann aber auch ein geeignetes Gleichlaufgelenk eingesetzt werden. Dadurch ist auch eine Verschwenkung der Lenkstange 8 parallel zur Achse der Gabel 9 möglich, um das Fahrzeug, wie im allgemeinen Teil der Beschreibung erklärt zusätzlich steuern zu können.

Am Rahmen 10 des Fahrzeugs sind Radaufhängungen 6 und 7 für die Hinterräder 2 und 3 und für jedes der Hinterräder 2 und 3 ein eigener Lenkantrieb 4 und 5 vorhanden. Die Lenkantriebe 4 und 5 sind bei diesem Beispiel quer zur Fahrzeuglängsachse ausgerichtet und als elektrische Linearantriebe, die von einer nicht dargestellten elektronischen Steuerung angesteuert werden, ausgebildet. Die Antriebe greifen an Wellen 2' und 3' der Hinterradaufhängungen 6 und 7 an, über die ein Verschwenken beim Lenken der Hinterräder 2 und 3 erfolgen kann. Dabei kann eine Getriebeübersetzung zwischengeschaltet sein, um die erforderlichen Drehmomente aufbringen zu können.

Die Antriebe für die Hinterräder 2 und 3 sind elektrische Radnabenmotore, die ebenfalls gesteuert werden.

Am Rahmen 10 sind hier zwei Elektroenergiespeicher 12 und eine Trittfläche 13 befestigt. In ebenfalls nicht dargestellter Form kann auch ein Sitz am Rahmen 10 befestigt werden. In diesem Fall kann es vorteilhaft sein, die Lenkstange 8 in Form eines Teleskops auszubilden, so dass eine ergonomische Nutzung des Fahrzeuges sowohl im Sitzen, wie auch im Stehen möglich ist.

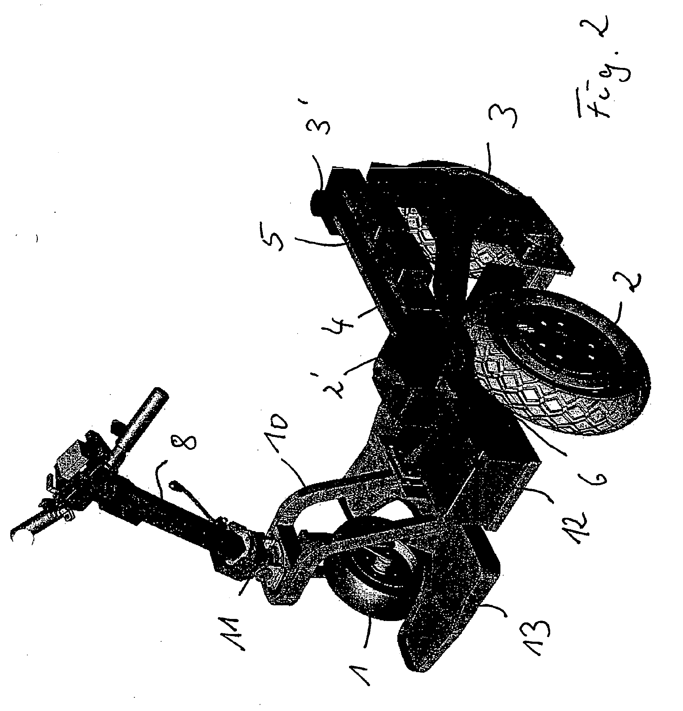

Mit Figur 2 soll gezeigt werden, wie eine Verschwenkung der Hinterräder 2 und 3 mittels der Lenkantriebe 4 und 5, bei Einschaltung eines Fahrmodus für eine Fahrt senkrecht zur Längsachse des Fahrzeuges, erfolgen kann. Die Hinterräder 2 und 3 werden hierzu in jeweils entgegen gesetzter Richtung verschwenkt bis sie parallel zueinander ausgerichtet sind. Hierzu ist eine Verschwenkbarkeit der Hinterräder 2 und 3 um jeweils mindestens 90 ° erforderlich. Die Fahrt senkrecht zur Fahrzeuglängsachse wird dann möglich, wenn auch noch das Vorderrad 1 parallel zu den Hinterrädern 2 und 3 eingelenkt wird.

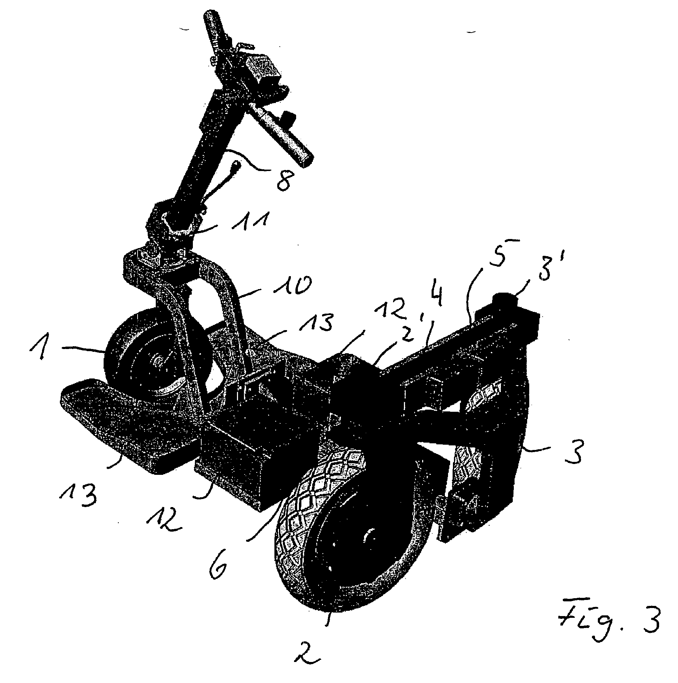

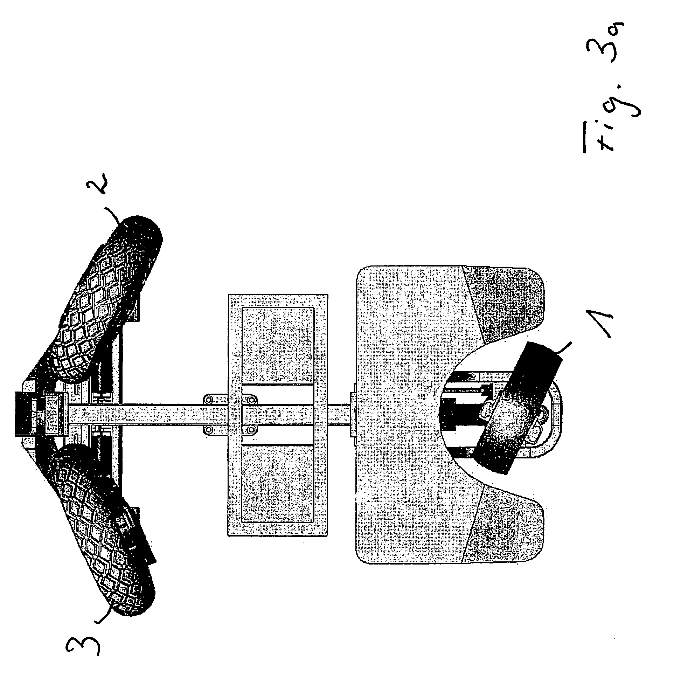

Mit Figur 3 soll ein weiterer möglicher Fahrmodus für ein erfindungsgemäßes Fahrzeug erläutert werden. Hierbei sind die Hinterräder 2 und 3 mittels der Lenkantriebe 4 und 5 mit jeweils gleichem Winkel aber in entgegen gesetzter Richtung verschwenkt worden, so dass sie zumindest annähernd einem gemeinsamen Radius folgen können. Bei entsprechend eingelenktem Vorderrad 1, ist dann eine Bewegung des Fahrzeuges um die eigene Achse möglich, so dass bei der Drehung, lediglich ein Raum erforderlich ist, dessen Durchmesser der Länge der Fahrzeugdiagonale entspricht.

Bei den Fahrmoden nach den Figuren 2 und 3 werden die Antriebe der Hinterräder 2 und 3 mit entgegen gesetzter Drehrichtung betrieben, obwohl sich die Hinterräder 2 und 3 letztendlich in die gleiche Richtung drehen.

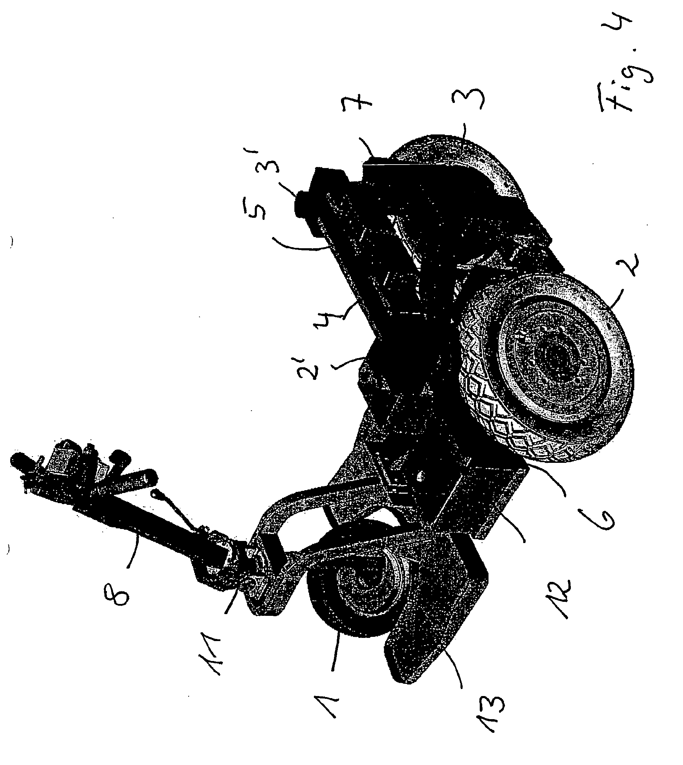

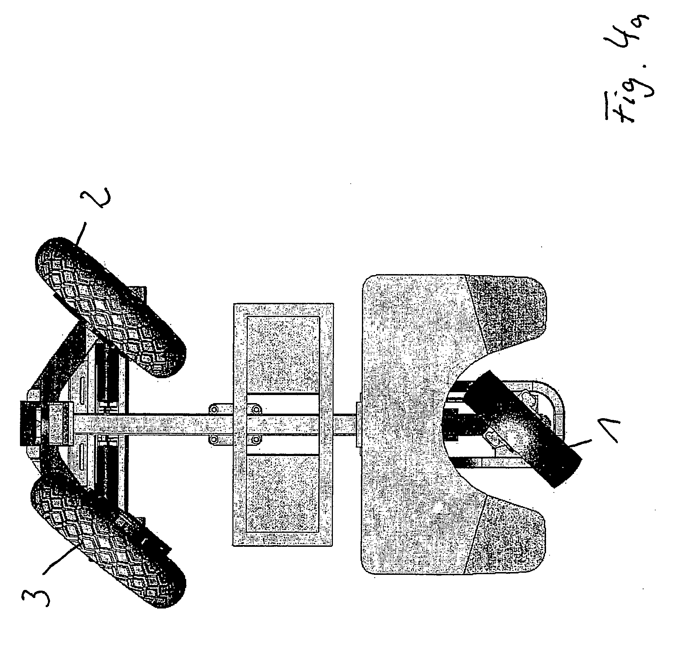

Bei dem Fahrzeug, wie es in Figur 4 gezeigt ist, wurde ein Fahrmodus eingestellt, der eine schräge Fahrt ermöglicht. So sind die Hinterräder 2 und 3 und auch das Vorderrad 1 so verschwenkt, dass sie parallel zueinander ausgerichtet sind und das Fahrzeug in diese Richtung fahren kann. Dabei ist die Längsachse des Fahrzeugs in einem schräg zur Fahrtrichtung geneigten Winkel ausgerichtet.

## Patentansprüche

1. Fahrzeug für behinderte Personen mit mindestens einem lenkbaren Vorderrad und zwei Hinterrädern (2, 3), die jeweils einzeln mit einer Radaufhängung an einem Rahmen (10) gehalten sind, **dadurch gekennzeichnet, dass** für jedes Hinterrad (2, 3) ein gesonderter, steuerbarer Lenkantrieb (4, 5) vorhanden ist.

2. Fahrzeug nach Anspruch 1, **dadurch gekennzeichnet, dass** die Hinterräder (2, 3) mit jeweils einem eigenen Antrieb versehen sind.

3. Fahrzeug nach Anspruch 1 oder 2, **dadurch gekennzeichnet, dass** die Antriebe Radnabenmotore sind.

4. Fahrzeug nach einem der vorhergehenden Ansprüche, **dadurch gekennzeichnet, dass** das Vorderrad (1) in einer Gabel (9) gehalten und mittels einer mit der Gabel (9) verbundenen Lenkstange (8) lenkbar ist.

5. Fahrzeug nach einem der vorhergehenden Ansprüche, **dadurch gekennzeichnet, dass** an der Lenkstange (8) mindestens ein Drehwinkelsensor angeordnet ist.

6. Fahrzeug nach einem der vorhergehenden Ansprüche, **dadurch gekennzeichnet, dass** eine elektronische Steuerung vorhanden ist.

7. Fahrzeug nach einem der vorhergehenden Ansprüche, **dadurch gekennzeichnet, dass** der/die Drehwinkelsensor(en), die Lenkantriebe (4, 5) und/oder die Antriebe für die Hinterräder (2, 3) mit der elektronischen Steuerung verbunden sind.

8. Fahrzeug nach einem der vorhergehenden Ansprüche, **dadurch gekennzeichnet, dass** ein Umschalter zur Auswahl vorgegebener Fahrmoden für die Ansteuerung der Hinterräder (2, 3) vorhanden ist.

9. Fahrzeug nach einem der vorhergehenden Ansprüche, **dadurch gekennzeichnet, dass** die Lenkstange (8) mit einem Kardan- oder Gleichlaufgelenk (11) mit der Gabel (9) verbunden ist.

10. Fahrzeug nach einem der vorhergehenden Ansprüche, **dadurch gekennzeichnet, dass** die Lenkantriebe (4, 5) Linearmotore sind.

11. Fahrzeug nach einem der vorhergehenden Ansprüche, **dadurch gekennzeichnet, dass** an den Lenkantrieben (4, 5) ein Spindel- oder Zahnstangenantrieb vorhanden ist.

12. Fahrzeug nach einem der vorhergehenden Ansprüche, **dadurch gekennzeichnet, dass** die Lenkstange (8) parallel zur Achse der Gabel (9) zwischen zwei Endanschlägen verschwenkbar ist.

13. Fahrzeug nach einem der vorhergehenden Ansprüche, **dadurch gekennzeichnet, dass** die Hinterräder (2, 3) um mindestens 90° verschwenkbar sind.

14. Fahrzeug nach einem der vorhergehenden Ansprüche, **dadurch gekennzeichnet, dass** auch am Vorderrad (1) ein steuerbarer Lenkantrieb vorhanden ist.

15. Fahrzeug nach einem der vorhergehenden Ansprüche, **dadurch gekennzeichnet, dass** zwei lenkbare Vorderräder vorhanden sind, die jeweils einzeln mittels Lenkantrieben verschwenkbar sind.

## Claims

1. Vehicle for disabled individuals with at least one steerable front wheel and two rear wheels (2, 3), each held individually in a frame (10) by means of wheel suspensions, **characterised in that** a separate, steerable steering drive (4, 5) is provided for each rear wheel (2, 3).

2. Vehicle according to Claim 1, **characterised in that** the rear wheels (2, 3) are each equipped with their own drive.

3. Vehicle according to Claim 1 or 2, **characterised in that** the drives consist of wheel hub motors.

4. Vehicle according to one of the preceding Claims, **characterised in that** the front wheel (1) is held in a fork (9) and is steerable by means of a handle bar (8) connected with the fork (9).

5. Vehicle according to one of the preceding Claims, **characterised in that** at least one turning angle sensor is located on the handle bar (8).

6. Vehicle according to one of the preceding Claims, **characterised in that** electronic steering is envisaged.

7. Vehicle according to one of the preceding Claims, **characterised in that** the turning angle sensor(s), the steering drives (4, 5) and/or the drives for the rear wheels (2, 3) are connected with the electronic steering.

8. Vehicle according to one of the preceding Claims, **characterised in that** a switch for selecting pre-determined drive modes is provided for controlling the rear wheels (2, 3).

9. Vehicle according to one of the preceding Claims, **characterised in that** the handle bar (8) is connected with the fork (9) via a universal joint or a synchronised joint (11).

10. Vehicle according to one of the preceding Claims, **characterised in that** the steering drives (4, 5) consist of linear motors.

11. Vehicle according to one of the preceding Claims, **characterised in that** a spindle or gear drive is provided on the steering drives (4, 5).

12. Vehicle according to one of the preceding Claims, **characterised in that** the handle bar (8) it tiltable between two end stops parallel with the axis of the fork (9).

13. Vehicle according to one of the preceding Claims, **characterised in that** the rear wheels (2, 3) can be tilted by at least 90°.

14. Vehicle according to one of the preceding Claims, **characterised in that** the front wheel (1) is also equipped with a steerable steering drive.

15. Vehicle according to one of the preceding Claims, **characterised in that** two steerable front wheels are provided, which can each be tilted individually by means of steering drives.

## Revendications

1. Véhicule pour handicapés, comportant au moins une roue avant dirigeable et deux roues arrières (2, 3), qui sont fixées respectivement par une suspension sur un châssis (10), **caractérisé en ce qu'**il existe un mécanisme de direction (4, 5) séparé et gouvernable pour chaque roue arrière (2, 3).

2. Véhicule selon la revendication 1, **caractérisé en ce que** les roues arrières (2, 3) sont munies respectivement d'un propre mécanisme de commande.

3. Véhicule selon les revendications 1 ou 2, **caractérisé en ce que** les mécanismes de commande sont des moteurs sur moyeux de roue.

4. Véhicule selon une des revendications précédentes, **caractérisé en ce que** la roue avant (1) est maintenue dans une fourche (9) et est dirigeable au moyen d'une bielle de direction (8) reliée à la fourche (9).

5. Véhicule selon une des revendications précédentes, **caractérisé en ce qu'**au moins un capteur d'angle de rotation est disposé sur la bielle de direction (8).

6. Véhicule selon une des revendications précédentes, **caractérisé en ce qu'**il existe une commande électronique.

7. Véhicule selon une des revendications précédentes, **caractérisé en ce que** le(les) capteur(s) d'angle de rotation, les mécanismes de direction (4, 5) et/ou les mécanismes de commande pour les roues arrières (2, 3) sont reliés à la commande électronique.

8. Véhicule selon une des revendications précédentes, **caractérisé en ce qu'**il existe un commutateur pour sélectionner des modes de conduite spécifiés en vue de l'amorçage des roues arrières (2, 3).

9. Véhicule selon une des revendications précédentes, **caractérisé en ce que** la bielle de direction (8) avec un joint de Cardan ou joint homocinétique (11) est reliée à la fourche (9).

10. Véhicule selon une des revendications précédentes, **caractérisé en ce que** les mécanismes de direction (4, 5) sont des moteurs linéaires.

11. Véhicule selon une des revendications précédentes, **caractérisé en ce qu'**il existe un mécanisme de commande à broche ou à crémaillère sur les mécanismes de direction (4, 5).

12. Véhicule selon une des revendications précédentes, **caractérisé en ce que** la bielle de direction (8) est pivotante parallèlement à l'axe de la fourche (9) entre deux butées de fin de course.

13. Véhicule selon une des revendications précédentes, **caractérisé en ce que** les roues arrières (2, 3) sont pivotantes à au moins 90°.

14. Véhicule selon une des revendications précédentes, **caractérisé en ce qu'**un mécanisme de direction gouvernable est également présent sur la roue avant (1).

15. Véhicule selon une des revendications précédentes, **caractérisé en ce qu'**il existe deux roues avant dirigeables, qui sont respectivement pivotantes individuellement au moyen de mécanismes de direction.
